# EUROPÄISCHE PATENTSCHRIFT

(11) **EP 0 584 648 B1**
(45) Veröffentlichungstag und Bekanntmachung des Hinweises auf die Patenterteilung: **09.10.1996**
(21) Anmeldenummer: 93112851.6
(22) Anmeldetag: 11.08.1993
(51) Int. Cl.: F16B 37/04

(54) **Halteklammer zum Verbinden von Platten mit unterschiedlichem Ausdehnungsverhalten**
Retaining clip for joining plates having different expansion behaviour
Agrafe de retenue pour assembler des plaques ayant un comportement différent à la dilatation

(30) Priorität: 27.08.1992 DE 4228511
(43) Veröffentlichungstag der Anmeldung: 02.03.1994
(73) Patentinhaber: A. Raymond GmbH & Co. KG, D-79539 Lörrach (DE)
(72) Erfinder: Müller, Klaus, D-79576 Weil-Haltingen (DE); Hullmann, Klaus, D-79540 Lörrach (DE)
(74) Vertreter: Kirchgaesser, Johannes, Dipl.-Ing.

(56) Entgegenhaltungen:
- US-A- 3 704 739
- US-A- 4 074 491

## Beschreibung

Die Erfindung bezieht sich auf eine Halteklammer mit Platte nach dem Oberbegriff des Anspruchs 1.

Derartige Plattenverbindungen sind bekannt aus **US - A - 4 728 235** und kommen beispielsweise im Automobilbau bei der Befestigung von Kunststoffgehäusen oder Kunststoffblenden an Karosserieteilen vor.

Derartige Plattenverbindungen kommen beispielsweise im Automobilbau vor bei der Befestigung von Kunststoffgehäusen oder -blenden an Karosserieteilen. Da die Kunststoffplatten sich in der Hitze stärker ausdehnen als das Karosserieblech, werden bei den Kunststoffplatten in Ausdehnungsrichtung Langlöcher vorgesehen. Hierbei besteht jedoch die Gefahr, daß die Schraubverbindungen bei den Halteklammern zu stark angezogen werden. Das hat dann zur Folge, daß die derart eingespannte Kunststoffplatte innerhalb der Halteklammern nicht ausweichen kann und sich dann zwischen den Verbindungsstellen wölbt.

Aufgabe der Erfindung ist es, die Halteklammer so zu gestalten, daß einerseits die Schraubverbindung in der Halteklammer für ein sicheres Einklemmen genügend stark angezogen werden kann und andererseits das Ausdehnungs-verhalten durch die Schraubverbindung nicht beeinträchtigt wird.

Diese Aufgabe wird nach der vorliegenden Erfindung dadurch gelöst, daß die Klemmschenkel koaxial zu den Durchgangslöchern mit zwei gegeneinandergerichteten Lochhülsen versehen sind, deren Gesamthöhe zwischen den beiden zusammengedrückten Klemmschenkeln größer ist als die Plattenstärke der einzuklemmenden Platte.

Durch diese einfache Maßnahme wird erreicht, daß die Klemmschenkel beim Anziehen der Schrauben stets auf dem gleichen Abstand zueinander gehalten werden und die Federlappen auf die Plattenoberfläche jeweils mit der gleichen Klemmkraft einwirken, welche so auszulegen ist, daß eine seitliche Verschiebung infolge Ausdehnung möglich ist.

Hierbei ist es für eine Oberflächen-schonende Auflage auf der Platte zweckmäßig, wenn die Federlappen so geformt sind, daß diese an ihren Abstützenden von der Plattenoberfläche mit einem leichten abgerundeten Knick weggebogen sind.

Um diese Federlappen ohne zusätzlichen Materialaufwand aus der Klammerplatine herausarbeiten zu können, ist weiterhin vorgesehen, daß jeder Klemmschenkel in seiner Längsachse beiderseits des Durchgangsloches zwei entgegengesetzt gerichtete Federlappen aufweist, welche aus dem mittleren Bereich der Klemmschenkel ausgestanzt und geformt sind.

In der Zeichnung ist ein bevorzugtes Ausführungsbeispiel der Erfindung dargestellt und soll nachfolgend näher erläutert werden. Es zeigt
- Fig. 1: die Halteklammer mit zusätzlichem Gewindeschenkel in einer Seitenansicht,
- Fig. 2: die Platine der Halteklammer in Draufsicht und
- Fig. 3: die Halteklammer im montierten Zustand.

Die vorliegende Halteklammer besteht aus zwei Klemmschenkeln 1 und 2 zum Einklemmen einer Kunststoffplatte 12 sowie aus einem Gewindeschenkel 3, welcher mit einer Gewindeprägung 4 zum Eindrehen einer Blechschraube 5 versehen ist.

Beide Klemmschenkel 1 und 2 besitzen in der Achse der Gewindeprägung 4 Durchgangslöcher 6 zum Durchstecken der Schraube 5. Koaxial zu den Durchgangslöchern weisen die Klemmschenkel 1 und 2 zwei gegeneinandergerichtete, aus dem Lochrand tiefgezogene Lochhülsen 7 auf, welche im zusammengedrückten Zustand der Klemmschenkel 1 und 2 bündig aufeinanderliegen. Die Höhen h₁ und h₂ der Hülsen 7 sind hierbei so bemessen, daß die Gesamthöhe "h₁ + h₂" zwischen den zusammengedrückten Schenkeln 1 und 2 größer ist als die Stärke "s" der zu haltenden Kunststoffplatte 12.

Die Klemmschenkel 1 und 2 stützen sich mit Federlappen 8 und 9 auf der Kunststoffplatte 12 ab, wobei die Federlappen 8 und 9 an ihren Abstützenden 10 und 11 mit einem leichten, abgerundeten Knick weggebogen sind. Dadurch wird sichergestellt, daß sich die Federlappen 8 und 9 nicht in die Oberfläche der Kunststoffplatte 12 eingraben.

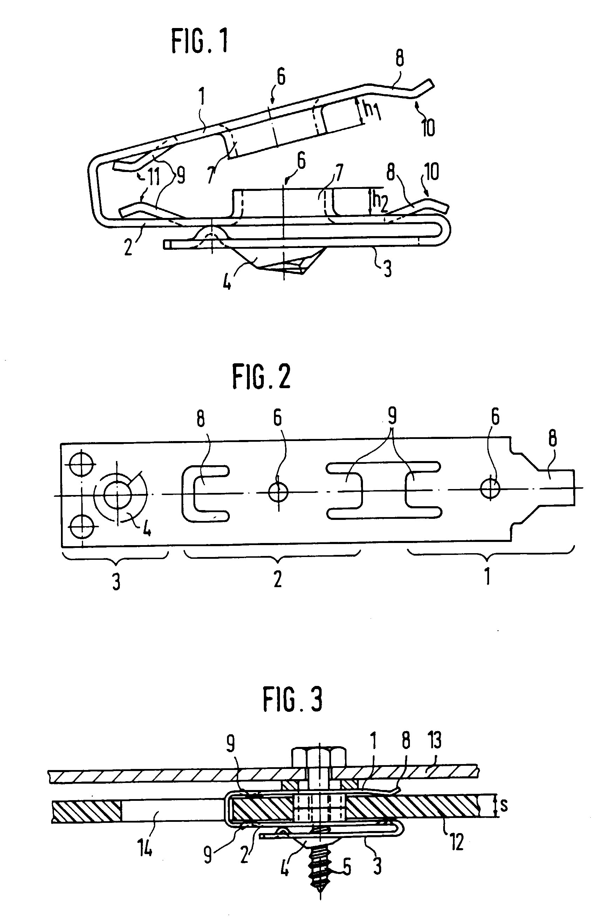

Wie insbesondere aus der in Figur 2 gezeigten Platine der Halteklammer ersichtlich, weist jeder Klemmschenkel 1 und 2 beiderseits der Durchgangslöcher 6 in seiner Längsachse zwei entgegengesetzt gerichtete Federlappen 8 und 9 auf. Diese Federlappen 8 und 9 sind jeweils aus dem mittleren Bereich der Klemmschenkel 1 und 2 ausgestanzt und geformt, so daß die Federlappen 8 und 9 materialsparend hergestellt werden können.

In Figur 3 ist die Halteklammer im montierten Zustand dargestellt. Die Klammer ist hierbei durch eine Montageaussparung 14 in der Kunststoffplatte 12 soweit eingeführt worden, bis die Hülsen 7 in die hierfür vorgesehenen Langlöcher in der Kunststoffplatte 12 eintauchen. Sodann wird die Halteklammer mit der Kunststoffplatte 12 an dem Karosserieblech 13 befestigt, indem vom Karosserieblech 13 aus eine Schraube 5 durch die Hülsen 7 gesteckt und in den Gewindeeindruck 4 eingedreht wird, und zwar so weit, bis die beiden Hülsen 7 fest aneinanderstoßen. Die Federlappen 8 und 9 spreizen sich dabei etwas nach außen und drücken von beiden Seiten mit einer definierten, gleichbleibenden Klemmkraft auf die Oberfläche der Kunststoffplatte 12, wodurch diese fest eingespannt ist und gleichzeitig in Plattenebene schwerverschieblich geführt ist.

## Patentansprüche

1. Halteklammer mit Platte (12) zum Verbindung mit Platten mit unterschiedlichem Ausdehnungsverhalten, wobei die Klammer aus zwei mit Durchgangslöchern ( 6 ) versehenen Klemmschenkeln ( 1 u. 2 ) zum Einklemmen der Platte (12) mittels sich auf der Platte abstützender Federlappen ( 8, 9 ) sowie aus einem weiteren Schenkel ( 3 ) besteht, welcher eine Gewindeprägung ( 4 ) zum Eindrehen einer Blechschraube (5) aufweist,
**dadurch gekennzeichnet**, daß die Klemmschenkel (1 u. 2) koaxial zu den Durchgangslöchern ( 6 ) mit zwei gegeneinander gerichteten Lochhülsen (7) ) versehen sind, deren Gesamthöhe ( h1 ) und ( h2 ) zwischen den beiden zusammengedrückten Schenkeln ( 1 u. 2 ) größer ist als die Plattenstärke ( s ) der einzuklemmenden Platte (12).

2. Halteklammer nach Anspruch 1, dadurch gekennzeichnet,
daß die Federlappen (8 u. 9) an ihren Abstützenden (10 u. 11) von der Plattenoberfläche mit einem leichten, abgerundeten Knick weggebogen sind.

3. Halteklammer nach Anspruch 2, dadurch gekennzeichnet,
daß jeder Klemmschenkel (1, 2) in seiner Längsachse beiderseits des Durchgangsloches (6) zwei entgegengesetzt gerichtete Federlappen (8, 9) aufweist, welche aus dem mittleren Bereich der Klemmschenkel (1 u. 2) ausgestanzt und geformt sind.

## Claims

1. A retaining clip with plate (12) for connection to plates with different expansion characteristics, wherein the clip comprises two clamping limbs (1 and 2) provided with through holes (6) for clamping in the plate (12) by means of spring tangs (8, 9) which are supported on the plate, and a further limb (3) which has a screwthread stamping (4) for screwing in a self-tapping screw (5), characterised in that the clamping limbs (1 and 2) are provided coaxially with the through holes (6) with two oppositely directed punched hole sleeves (7) whose total height (h1) and (h2) between the two limbs (1 and 2) when pressed together is greater than the thickness (s) of the plate (12) to be clamped in.

2. A retaining clip according to claim 1 characterised in that at their support ends (10 and 11) the spring tangs (8 and 9) are bent away from the surface of the plate with a slight rounded bend.

3. A retaining clip according to claim 2 characterised in that each clamping limb (1, 2) has on its longitudinal axis on both sides of the through hole (6) two oppositely directed spring tangs (8, 9) which are stamped and shaped out of the central region of the clamping limbs (1 and 2).

## Revendications

1. Agrafe de retenue à plaquette (12) pour assembler des plaques ayant un comportement différent à la dilatation, l'agrafe se composant en l'occurrence de deux pattes de serrage (1 et 2) comportant un trou débouchant (6) pour le serrage de la plaque (12) à l'aide de languettes élastiques (8, 9) prenant appui sur la plaque, ainsi que d'une autre patte (3), qui comporte une empreinte de filetage (4) pour le vissage d'une vis Parker (5), caractérisée en ce que les pattes de serrage (1 et 2) sont munies de deux douilles perforées (7) orientées en opposition l'une par rapport à l'autre, disposées coaxialement par rapport aux trous débouchants, dont la hauteur totale (hl) et (h2) entre les deux pattes (1 et 2) serrées ensemble est supérieure à l'épaisseur (s) de la plaque à serrer (12).

2. Agrafe de retenue selon la revendication 1, caractérisée en ce que les pattes (8 et 9) s'écartent, au niveau de leurs extrémités d'appui (10 et 11), de la surface de la plaque en formant une légère pliure arrondie.

3. Agrafe de retenue selon la revendication 2, caractérisée en ce que chaque patte de serrage (1, 2) comporte, sur son axe longitudinal, des deux côtés du trou débouchant (6), deux pattes élastiques (8, 9) orientées en opposition, qui sont découpées à la presse et réalisées solidaires de la zone centrale des pattes de serrage (1 et 2).
